# EUROPÄISCHE PATENTANMELDUNG

(11) **EP 2 275 780 A2**
(43) Veröffentlichungstag der Anmeldung: **19.01.2011**
(21) Anmeldenummer: 10002143.5
(22) Anmeldetag: 03.03.2010
(51) Int. Cl.: G01C 21/34

(54) **Verfahren zur Unterstützung der Bildung von Fahrgemeinschaften**

(30) Priorität: 14.07.2009 DE 102009026171
(71) Anmelder: Paade Gmbh, 78582 Balgheim (DE)
(72) Erfinder: Teufel, Thomas, 78582 Balgheim (DE)
(74) Vertreter: Geitz Truckenmüller Lucht

(57) **Zusammenfassung**

Zur Kontaktaufnahme zwischen den Führern verschiedener Fahrzeuge ist es bekannt, ein Nutzerendgerät im Fahrzeug vorzusehen, welches Zugriff auf einen Server mit angeschlossener Datenbank hat. Über diese Datenbank kann durch Eingabe des Kfz-Kennzeichens als Nutzerkennung Kontakt mit einem anderen Nutzer hergestellt werden, der ebenfalls in der Datenbank eingetragen ist, möglicherweise dieselbe Fahrtstrecke benutzt und dem Nutzer als solches auffällt. Dies erweitert die vorliegende Erfindung dadurch, dass bei Eingabe eines Fahrtziels in ein Navigationsgerät die hieraus berechnete Fahrtstrecke in die Datenbank eingetragen wird und der Server selbsttätig einen Abgleich mit den hinterlegten Fahrtstrecken anderer Nutzer vornimmt und Kontakt zwischen den Nutzern mit korrelierenden Nutzerdatensätzen herstellt.

## Beschreibung

Die vorliegende Erfindung betrifft ein Verfahren zur Unterstützung der Bildung von Fahrgemeinschaften, bei dem ein Nutzerendgerät mit einem eine Datenbank umfassenden Server datenverbunden ist und die Datenbank einen dem Nutzerendgerät zugeordneten Nutzerdatensatz enthält, wobei der Server auf Anfrage durch das Nutzerendgerät korrelierende zweite Nutzerdatensätze innerhalb der Datenbank sucht und im Erfolgsfall einen öffentlichen Teil dieser zweiten Nutzerdatensätze an das Nutzerendgerät übermittelt.

Ein derartiges Verfahren ist bereits aus der US-Patentanmeldung 2006/0059229 A1 vorbekannt. Einem solchen System liegt ein zentraler Server zu Grunde, mit welchem insbesondere über drahtlose Kommunikation ein Datenaustausch von einem Nutzerendgerät aus durchgeführt werden kann. Zunächst ist hierfür eine Anmeldung bei dem Serverdienst erforderlich, wobei ein Nutzerdatensatz erstellt wird, der dem jeweiligen Nutzerendgerät zugeordnet ist. Das genannte Verfahren sieht sodann vor, dass einem Nutzerdatensatz eine individuelle Kennung zugeordnet wird, also beispielsweise das Kfz-Zeichen des Nutzers, und dass eine Kommunikation von einem Nutzer durch Eingabe eines auf der Straße erblickten Kfz-Zeichens in das Nutzerendgerät über den Server hergestellt wird. Der Server empfängt die unter Verwendung des Kfz-Zeichens als Kennung erhaltene Nachricht und leitet diese an das Nutzerendgerät, welchem die fragliche Kennung zugeordnet ist, weiter. Unter anderem ist vorgesehen, ein derartiges System auch für die Anbahnung von Kontakten zur Bildung von Fahrgemeinschaften zu nutzen.

In ähnlicher Weise arbeitet auch der Gegenstand des deutschen Gebrauchsmusters DE 298 22 488 U1. Hier wird eine direkte Sprachverbindung zwischen den Nutzerendgeräten vermittelt, anstatt die fragliche Kommunikation über den Server laufen zu lassen. Im Übrigen ist jedoch die Vorgehensweise ähnlich.

Aus den unterschiedlichsten Erwägungsgründen heraus stellen Fahrgemeinschaften eine zunehmend an Beliebtheit gewinnende Alternative zu öffentlichen Verkehrsmitteln dar. Im Gegensatz zu einer Einzelfahrt im eigenen Fahrzeug werden bereits bei einer Fahrgemeinschaft aus zwei Personen unter dem Strich die Kosten für ein Fahrzeug eingespart, Benzinkosten halbiert, gleichzeitig die Umwelt geschont und die Straßen entlastet.

So sind bereits im Internet seit längerem Fahrgemeinschaftsbörsen bekannt, auf welchen sich die jeweiligen Nutzer registrieren und die von ihnen gefahrenen Wegstrecken hinterlegen. Auf diesen Datensätzen können dann andere Nutzer eine Suche nach bestimmten Fahrtstrecken durchführen, so andere Teilnehmer mit dem gleichen Weg gegebenenfalls auch zur gleichen Uhrzeit herausfinden und diese mit dem Ziel der Bildung einer Fahrgemeinschaft kontaktieren. Es erfordert dies jedoch eine längere Planung, nachdem es zunächst erforderlich ist, dass der erste Nutzer seine Daten in das System stellt, der zweite Nutzer diese auffindet und auf das Angebot reagiert und schließlich der Anbieter das Angebot annimmt. Ein derartiges System ist daher selbstverständlich nur für regelmäßige Fahrten einsetzbar oder allenfalls bei einer längerfristigen Vorbereitung.

Zudem wird eine derartige Suche üblicherweise von einem internetfähigen Homecomputer aus gestartet, sodass der jeweilige Nutzer sich zunächst dafür entscheiden muss, eine Fahrgemeinschaft bilden zu wollen und dann unter Zuhilfenahme des Homecomputers seine Reise zu planen bzw. seine Fahrten zu managen. Insbesondere bei kleineren Fahrten wird der Nutzer möglicherweise bereits nach einer geringeren Anzahl von Versuchen die Lust hieran verlieren und dadurch das eigentlich zur Verfügung stehende System nur sehr ineffizient nutzen.

Vor diesem Hintergrund liegt der vorliegenden Erfindung die Aufgabe zu Grunde, ein Verfahren zur Unterstützung der Bildung von Fahrgemeinschaften zu schaffen, welches sehr kurzfristige Bildungen von Fahrgemeinschaften explizit vereinfacht und die vorhandenen Systeme zur Anbahnung von Fahrgemeinschaften effizienter nutzt.

Dies gelingt durch ein Verfahren zur Unterstützung der Bildung von Fahrgemeinschaften gemäß den Merkmalen des Hauptanspruchs. Weitere sinnvolle Ausgestaltungen eines derartigen Verfahrens können den Unteransprüchen entnommen werden.

Ähnlich wie bei bekannten Verfahren sieht das erfindungsgemäße Verfahren einen zentralen Server vor, mit dem mithilfe von Nutzerendgeräten kommuniziert wird. Grundsätzlich besitzt jeder Nutzer ein Nutzerendgerät, sowie einen Nutzerdatensatz, welcher auf einer dem Server zugeordneten Datenbank hinterlegt ist.

Dem Nutzerendgerät ist zusätzlich ein Navigationsgerät zugeordnet, welches beispielsweise auch in einer gemeinsamen Baugruppe untergebracht sein kann. Navigationsgerät bezeichnet hierbei jede Form von Positionserfassung, welche auch direkt in gleicher Baugruppe mit dem Nutzerendgerät gekoppelt sein kann. Insbesondere wird als Ausgestaltung ein Nutzerendgerät in Form eines so genannten Smartphones vorgeschlagen, dem eine Navigationssoftware zugeordnet ist.

Der Nutzer kann nunmehr sein Navigationsgerät in herkömmlicher Weise zur Berechnung einer Fahrtstrecke verwenden, welche entweder von einem ausgesuchten Ort an einen anderen ausgesuchten Ort, oder aber von der aktuellen Position aus zu einem bestimmten Zielort führt. Nach der Berechnung der Fahrtstrecke kann das Navigationsgerät über das Nutzerendgerät die berechnete Fahrtstrecke an den Server übertragen, wo diese in den Nutzerdatensatz eingepflegt wird. Anschließend durchsucht der Server die sonstigen in der Datenbank gespeicherten Nutzerdatensätze nach korrelierenden Datensätzen, von welchen nach vorgebbaren Kriterien zu erwarten ist, dass sinnvollerweise eine Fahrgemeinschaft zwischen zwei Nutzern gebildet werden kann. Wichtigste Voraussetzung ist hier sicherlich die zumindest abschnittsweise gleiche Fahrtstrecke, allerdings sind auch weitere Merkmale als Suchkriterien denkbar, so z. B. Alter, Geschlecht, Raucher/Nichtraucher und viele mehr. Der Server wird das Ergebnis seiner Suche an das Nutzerendgerät zurückmelden und hierbei einen öffentlichen Teil der aufgefundenen Nutzerdatensätze übermitteln. Ein solcher öffentlicher Teil kann beispielsweise eine Nutzerkennung enthalten, über welche ein zweiter Nutzer kontaktiert werden kann oder auch bereits Teile der oben genannten Merkmale. Es ist vorgesehen, jedoch nicht erforderlich, dass der vollständige Datensatz des zweiten Nutzers dem Nutzer erst zugänglich gemacht wird, nachdem eine Vereinbarung über die Bildung einer Fahrgemeinschaft geschlossen wurde und der Server hiervon benachrichtigt wird, um im Zweifel die Anonymität der Nutzer untereinander zu wahren.

Auf diese Weise ist es möglich, praktisch bei jeder Eingabe einer Fahrtstrecke in das Navigationssystem gleichzeitig zu prüfen, ob in der Nähe und zur gleichen Zeit möglicherweise eine ähnliche Fahrt geplant wird, gegebenenfalls auch unterwegs ein Mitfahrer aufgenommen werden kann, und so ein regelmäßiger Gang zum Homecomputer nicht vor jeder Fahrt erforderlich wird. Die Möglichkeiten des Systems werden dadurch deutlich effektiver genutzt und es ist im übrigen auch bei Einzelfahrten, welche teilweise möglicherweise sogar spontan stattfinden, ohne weiteres möglich, das System ebenfalls einzubinden. Durch Mitnahme des Nutzerendgerätes ist es zudem auch möglich, eine Fahrt von unterwegs aus zu planen bzw. umzuplanen und beispielsweise von unterwegs aus vom Zug auf die Fahrgemeinschaft umzusteigen.

Es ist im Rahmen der Erfindung sowohl möglich, eine Abfrage in das Verfahren einzubauen, ob die eingegebene Fahrtstrecke an den Server übertragen werden soll oder nicht, als auch diese Übertragung an den Server selbsttätig vom Nutzerendgerät durchführen zu lassen. Ist für die ein oder andere Strecke nicht gewünscht, entweder Mitfahrer im Auto mitzunehmen, weil beispielsweise das Auto ohnehin voll besetzt sein wird, oder auch das Mitfahren im fremden Auto nicht gewünscht, so kann auf diese Weise der jeweilige Nutzer sich, gegebenenfalls auch zeitweise, aus dem System ausklinken.

Gleiches gilt für die Information, ob es sich bei einer eingegebenen Fahrtstrecke um eine regelmäßige oder eine aktuelle Fahrtstrecke handelt. Eine regelmäßige Fahrtstrecke bedeutet beispielsweise eine morgendliche Fahrt zur Arbeit, wobei im Zusammenhang mit der Regelmäßigkeit als solchen auch die Regel, der diese regelmäßige Fahrt folgt, ebenfalls eingegeben werden kann. Beispielsweise kann hier vorgesehen sein, dass eine derartige regelmäßige Fahrt an jedem Werktag morgens um 8.00 Uhr stattfindet, oder auch jeden zweiten Samstag Mittag um 12.00 Uhr. Handelt es sich nicht um eine regelmäßige Fahrtstrecke, die also gegebenenfalls wiederholt wird, so ist das System dahingehend parametrierbar, dass es sich lediglich um eine aktuelle Fahrt handelt, wobei wahlweise auch zusätzlich eingegeben werden kann, wann diese Fahrt tatsächlich beginnen soll. Es ist mithin durchaus sinnvoll, eine derartige Fahrt auch zeitlich etwas vor tatsächlichem Fahrtantritt anzumelden, sodass ein in der Nähe befindlicher möglicher Mitfahrer auch die Gelegenheit hat, hierauf rechtzeitig zu reagieren. Eine Abfrage, ob ein anderer Nutzer Interesse an einer Mitfahrt hat, kann beispielsweise dann vor oder beim Fahrtantritt durchgeführt werden.

In Weiterbildung des Verfahrens kann auch ohne die Eingabe einer regelmäßigen Fahrtstrecke das System eine derartige Regelmäßigkeit ermitteln, indem in regelmäßigen oder unregelmäßigen Abständen das Navigationsgerät seine aktuellen Koordinaten an den Server sendet. Dieser ermittelt aus den nacheinander aufgesuchten Koordinaten die aktuell gefahrene Strecke und vergleicht diese mit den im Speicher befindlichen früheren Fahrten, sodass das System entweder derartige als regelmäßig erkannte Fahrten als solche in den Nutzerdatensatz einträgt oder zumindest einen Vorschlag an den Nutzer unterbreitet, eine derartige Fahrtstrecke als regelmäßige Fahrtstrecke zu hinterlegen. Diese Erweiterung ist der Einsicht geschuldet, dass der Fahrer regelmäßig kein Navigationsgerät für ihm geläufige Strecken benutzen wird, nachdem er sich auf diesen Strecken nicht anhand des Navigationsgerätes orientieren muss.

Die selbst ermittelten oder auch von Hand eingegebenen Strecken können mit einigem Vorteil von dem System in Fahrtstreckenabschnitte unterteilt werden, indem den Fahrtstrecken Wegpunkte zugeordnet werden. Insbesondere an größeren Knotenpunkten, etwa Raststätten oder größeren Städten können derartige Wegpunkte gesetzt werden, was eine Vereinfachung in Bezug auf die Aufnahme von Mitfahrern lediglich für Teilstrecken bedeutet. Durch die explizite Einführung von Wegpunkten wird es nämlich ermöglicht, dass diese Wegpunkte auch mit Start- und Zielpunkten anderer Wegstrecken verglichen werden und die Suche nach gemeinsamen Fahrtstrecken oder Fahrtstreckenabschnitten vereinfacht wird. Fährt beispielsweise ein erster Nutzer von Augsburg nach Karlsruhe, so könnte durch die Einführung der Wegpunkte Ulm und Stuttgart auch ein zweiter Nutzer, mit Standort Ulm und Fahrtziel Stuttgart, auf diesem Weg mittransportiert werden. Hierzu ist es teilweise sinnvoll, derartige Start- und Zielpunkte sowie die Wegpunkte mit einer gewissen Toleranz zu behandeln, sodass eine Vorbeifahrt auf einem wichtigen Verkehrsweg in einem gewissen Abstand zu einer Stadt den Wegpunkt dieser Stadt dennoch tangiert. Dies ist der Erkenntnis geschuldet, dass eine zu 100% übereinstimmende Strecke eher selten ist und bei einer Vorbeifahrt an einem geringfügig von der Strecke entfernten Ort durchaus ein kleiner Umweg in Kauf genommen werden kann, um einen Mitfahrer aufzunehmen.

Derartige Start- und Zielpunkte, sowie auch die Wegpunkte können mit einigem Vorteil direkt über ein Internetportal auf dem Server eingestellt werden, sodass dort ein übersichtliches Management der regelmäßigen Fahrtstrecken, gegebenenfalls auch der aktuellen Fahrtstrecken, erfolgen kann. Ebenfalls kann über dieses Internetportal ohne weiteres auch eine Abfrage nach korrelierenden Nutzerdatensätzen erfolgen.

Grundsätzlich kann in dem beschriebenen Verfahren zwischen einem Angebot und einem Gesuch unterschieden werden, wobei einem Nutzerdatensatz mit einer bestimmten Fahrtstrecke für diese Fahrtstrecke ein Angebotscharakter, ein Gesuchscharakter oder auch beides zugeordnet werden kann. Hierbei bedeutet ein Angebot, das die Nutzung des Fahrzeugs des Nutzers vorgesehen ist, wohingegen ein Gesuch ausdrücklich die Nutzung eines fremden Fahrzeugs vorsieht. Wird eine Fahrtstrecke als Angebot und als Gesuch charakterisiert, so kann über die Benutzung des jeweiligen Fahrzeugs verhandelt werden. Es ist lediglich sinnvoll, Fahrtstrecken, die als Gesuch charakterisiert sind mit Fahrtstrecken anderer Nutzerdatensätze zu kombinieren, welche als Angebot deklariert sind, sodass sichergestellt ist, dass zumindest auf einer Seite ein Fahrzeug vorhanden ist. Gegebenenfalls kann das Verfahren auch dahin abgewandelt werden, dass auch ein Angebot mit einem Angebot kombinierbar ist. In diesem Fall könnten sich die Nutzer auf die Benutzung eines der beiden Fahrzeuge einigen.

Nachdem der Server dem anfragenden Nutzer und gegebenenfalls auch dem aufgefundenen Nutzer signalisiert hat, dass die Möglichkeit der Bildung einer Fahrgemeinschaft aufgefunden wurde, wird er zumindest einen der betroffenen Nutzer zur Abgabe eines Angebots zur Initiierung einer Fahrgemeinschaft auffordern. Im Rahmen eines solchen Angebots wird dem jeweiligen Nutzer über sein Nutzerendgerät zumindest der öffentliche Teil, gegebenenfalls auch der nichtöffentliche Teil des Nutzerdatensatzes der anderen beteiligten Nutzer zugänglich gemacht, gleichzeitig können die Nutzer untereinander die Modalitäten einer Mitnahme im Rahmen einer Fahrgemeinschaft klären. In konkreter Ausgestaltung ist es beispielsweise möglich, einen Geldbetrag einzugeben, in dessen Höhe sich an den Fahrtkosten beteiligt werden soll. Hierüber kann anschließend von den Nutzern bedarfsweise verhandelt werden.

Nachdem die Kommunikation zwischen Server und Nutzerendgerät üblicherweise, wie bereits erwähnt, über eine drahtlose Kommunikationsverbindung, beispielsweise Funk, mobiles Internet oder GPS-SMS, abgewickelt wird, ist es auch möglich, dass der Server eine direkte Kommunikation zwischen den Nutzerendgeräten einleitet. Eine solche direkte Kommunikation kann hierbei anonym gehalten werden, sodass bei Fehlschlag der Verhandlungen ein Datenmissbrauch vermieden ist. Eine solche Kommunikationsverbindung kann auch eine Sprechverbindung sein, welche insbesondere nach Bestätigung zumindest eines der beiden Nutzer zwischen den Nutzerendgeräten aufgebaut wird. Für eine derartige Sprechverbindung wird vorzugsweise das Voice-over-IP benutzt, jedoch sind auch andere geeignete Sprechverbindungen hierfür denkbar. Auch andere direkte Kommunikationsverbindungen, wie beispielsweise eine Chatline, können erfindungsgemäß eingesetzt werden.

Ergänzend zu dem oben beschriebenen Verfahren ist es auch möglich, einen zweiten Nutzer anhand einer ihm zugeordneten Kennung aufzurufen und zu prüfen, ob eine Fahrgemeinschaft mit einem bestimmten Nutzer gebildet werden kann. Hierzu kann der Nutzer beispielsweise als Kennung das Kfz-Zeichen verwenden, wobei dann dem Kfz-Zeichen am Fahrzeug eine Kennzeichnung in irgendeiner Form zugeordnet werden sollte, um kenntlich zu machen, dass der Führer des fraglichen Fahrzeuges Nutzer bei dem beschriebenen Dienst ist. Dies kann beispielsweise durch einen Aufkleber oder eine farblich abgesetzte Nummerntafelhalterung bewerkstelligt werden. Der Server wird bei einer derartigen Anfrage anhand einer Kennung speziell den Nutzerdatensatz aufrufen, der mit der Kennung verbunden ist. Danach wird er prüfen, ob gegebenenfalls eine Übereinstimmung der Fahrtstrecken konkret vorliegt und ein entsprechendes Angebot unterbreiten. Ferner kann auch eine automatische Erkennung stattfinden, ob der registrierte Nutzer bei dem Dienst in den Nutzerdaten sein Kfz-Kennzeichen hinterlegt hat.

Alternativ zu einer absoluten Adressierung des angesprochenen zweiten Nutzers kann eine relative Adressierung dadurch erfolgen, dass der zweite Nutzer über seine aktuelle Position identifiziert wird. Hierzu kann eine Abstandsmessung zwischen dem Nutzer und dem zweiten Nutzer durchgeführt werden, etwa über ein Radargerät am Fahrzeug des Nutzers. Abhängig von geografischer Position und Ausrichtung des Radars kann dadurch auf die Position des zweiten Nutzers rückgeschlossen werden und hierdurch eine Identifizierung vorgenommen werden.

Erforderlich für diesen Dienst ist ein Navigationssystem oder ein Routenplaner, welcher in Verbindung mit dem Nutzerendgerät steht.

Konkret kann im Falle der Kontaktaufnahme eine GPS-SMS an den zweiten Nutzer gerichtet werden, welche beispielsweise am Nutzerendgerät des zweiten Nutzers ein Gespräch mit dem Nutzer auslöst, also eine Kommunikationsverbindung mit dem Nutzerendgerät des Nutzers aufbaut.

Es ist in diesem Fall, jedoch auch für andere Anwendungen sinnvoll, wenn die geographische Position der Nutzer in regelmäßigen oder unregelmäßigen zeitlichen Abständen erfasst und an den Server weitergeleitet wird, so dass eine Identifizierung der teilnehmenden Nutzer anhand ihrer Position möglich ist. Darüber hinaus ist es so möglich, die Position eines oder mehrerer zweiter Nutzer an hierfür autorisierte Nutzer weiterzugeben, so dass diese Position für die autorisierten Nutzer sichtbar gemacht werden kann.

Konkret kann dadurch ein Nutzer einen zweiten Nutzer zumindest nach dessen Zustimmung auf eine Positivliste setzen, wobei die Positionsdaten der auf dieser Positivliste eingetragenen zweiten Nutzer auf einer auf dem Nutzerendgerät des Nutzers gespeicherten Rasterkarte angezeigt werden. Hierdurch kann der Nutzer die Bewegungen des zweiten Nutzers nachverfolgen und so entscheiden, ob und wo ein Treffen mit dem zweiten Nutzer stattfinden kann bzw. soll.

Die Rasterkarte, anhand derer mit Vorteil auch die Wegberechnung erfolgt, muss hierbei auf allen beteiligten Nutzerendgeräten gleich sein, so dass entweder bei der Aufnahme eines Nutzers in die Positivliste ein Abgleich der Rasterkarten erfolgt. Abweichungen der Nutzerpositionen können so vermieden werden. Bevorzugtermaßen kann auch ein Rückgriff auf eine gemeinsame Datenquelle vorgegeben sein, so dass beispielsweise eine Rasterkarte auf dem Server vorgehalten wird, welche von allen Nutzern verwendet wird.

Über die Rasterkarte, auf der die Position auch eines zweiten Nutzers dargestellt wird, kann eine Kommunikationsverbindung aufgebaut werden, indem wie bereits oben beschrieben eine GPS-SMS an den zweiten Nutzer gesendet wird, welche einen Rückruf auslöst. Eine Berechnung der Position des zweiten Nutzers kann hierbei natürlich entfallen, vielmehr ist die Position des zweiten Nutzers dem System bekannt.

Insoweit kann alternativ zu einer Kontaktaufnahme über die GPS-SMS auch ein Anruf bei dem zweiten Nutzer initiiert werden, da dessen Nutzerdaten dem Nutzer bekannt sind.

Schließlich kann die bereits vorhandene Positionsinformation im System dazu benutzt werden, dem Nutzer positionsrelevante Inhalte zuzusenden. Zum Einen kann es sich hierbei um Werbung handeln, die sich auf bestimmte Angebote in der Umgebung des Nutzers beziehen. Ebenso kann beispielsweise bei Betreten eines Theaters dem Nutzer das Programm auf diesem Wege zur Verfügung gestellt werden.

Die vorstehend beschriebene Erfindung wird im Folgenden anhand eines Ausführungsbeispiels näher erläutert.

Es zeigen
- Figur 1: ein Kommunikationsschema eines Verfah- rens zur Unterstützung der Bildung von Fahrgemeinschaften,

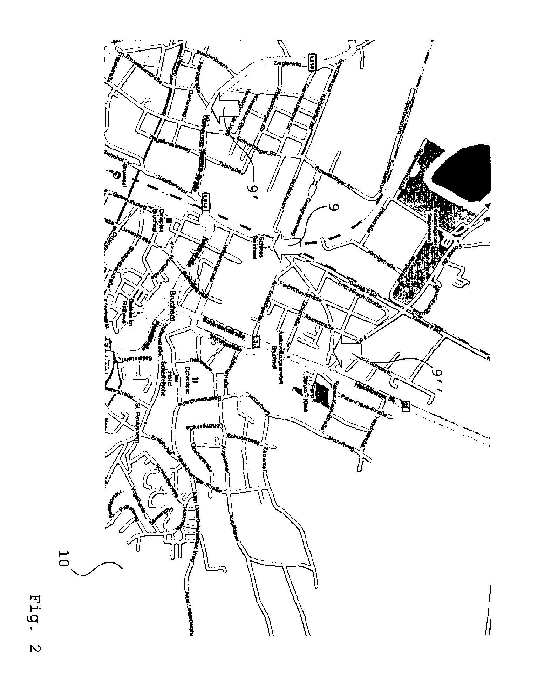

- Figur 2: eine Rasterkarte mit mehreren Nutzern, deren Positionsinformationen über eine Positivliste ausgetauscht werden, und
- Figur 3: ein Kommunikationsschema eines Verfah- rens zur Kontaktaufnahme mit einem zweiten Nutzer.

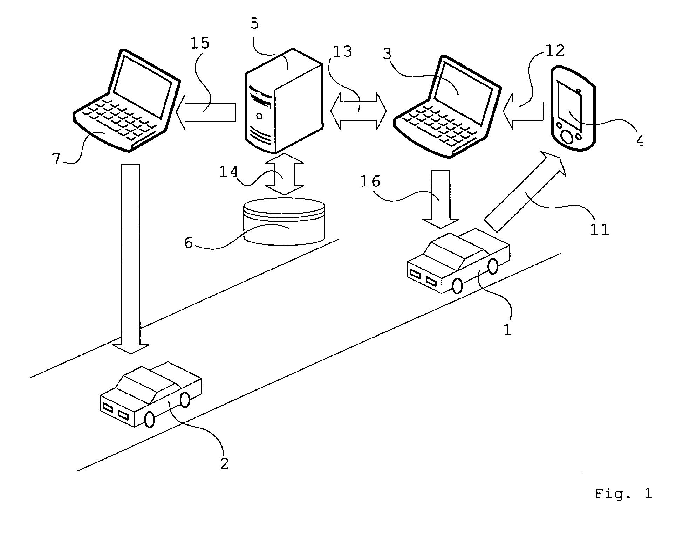

Figur 1 zeigt ein Kommunikationsschema, in welchem ein Nutzer 1 mit seinem Kraftfahrzeug eine Fahrt unternimmt. Der Nutzer 1 wird bei Fahrtantritt sein Navigationsgerät 4 dafür benutzen, eine Fahrtstreckeneingabe 11 vorzunehmen um so den Weg zu seinem Ziel von dem Navigationsgerät 4 berechnen zu lassen. Nach der Berechnung der Fahrtstrecke für den Nutzer 1 wird das Navigationsgerät 4 eine Übergabe der Fahrtstreckendaten 12 an ein Nutzerendgerät 3 des Nutzers 1 veranlassen, woraufhin das Nutzerendgerät 1 die Fahrtstreckendaten im Wege der Kommunikation 13 zu einem Server 5 an diesen weitergibt. Dem Server 5 ist eine Datenbank 6 zugeordnet, in welchem Nutzerdatensätze gespeichert sind, so auch ein Datensatz des Nutzers 1. Der Server 5 wird die von dem Nutzerendgerät 3 empfangenen Fahrtstreckendaten in den Nutzerdatensatz des Nutzers 1 speichern und startet sodann eine Suche auf der Datenbank 6, um korrelierende Datensätze aufzufinden.

Auf derselben Straße wie Nutzer 1 fährt ein weiterer Nutzer 2, welcher ebenfalls in das System eingebunden ist. Dieser hat bereits im Vorfeld über ein zweites Nutzerendgerät 7 seine Fahrtstreckendaten in die Datenbank 6 eingegeben. Nach der von Nutzer 1 durchgeführten Fahrtstreckeneingabe 11 gleicht nunmehr der Server 5 die Datensätze innerhalb der Datenbank 6 gegeneinander ab und stellt im Wege einer Datenbankabfrage 14 fest, dass die Nutzer 1 und 2 eine zumindest teilweise gleiche Fahrtstrecke vorgesehen haben. Der Server 5 wird daher ein Angebot 15 an den Nutzer 2 erstellen, in welchem er dem Nutzer 2 die Möglichkeit gibt, zu entscheiden, ob er mit dem Nutzer 1 eine Fahrgemeinschaft bilden möchte. Gleiches wird der Server 5 mit dem Nutzer 1 tun. Der Nutzer 2 kann nunmehr über sein zweites Nutzerendgerät 7 ein Angebot an den Nutzer 1 unterbreiten, für welchen Betrag er die gemeinsame Teilstrecke mit dem Nutzer 1 fortsetzen würde. Der fragliche Betrag dient hierbei zur anteiligen Deckung der gemeinsamen Fahrtkosten. Hierüber ergeht sodann eine Mitteilung 16 an den Nutzer 1, der darauf entscheiden kann, ob er unter den genannten Voraussetzungen die Fahrt gemeinsam mit dem Nutzer 2 fortsetzen möchte. In diesem Stadium können dann auch weitere Bestandteile des Nutzerdatensatzes in Betracht gezogen werden, so beispielsweise, ob es sich bei dem Nutzer 2 um einen Raucher oder Nichtraucher handelt, sowie weitere persönliche und gegebenenfalls entscheidungsrelevante Daten.

Soweit mehrere Nutzer 1,2 gemeinsam das oben beschriebene Verfahren nutzen, so kann eine regelmäßige Erfassung der Position der einzelnen Nutzer 1,2 stattfinden, so dass in der Datenbank 6 regelmäßig aktualisierte Informationen über die Position der Nutzer 1,2 vorhanden sind. So kann ein Nutzer 1 einen zweiten Nutzer 2 in eine Positivliste aufnehmen, welche nach Autorisierung durch den zweiten Nutzer 2 Positionsinformationen des zweiten Nutzers 2 enthält. Alle in der Positivliste des Nutzers 1 enthaltenen Positionsinformationen werden auf einer im Nutzerendgerät 3 des Nutzers 1 gespeicherten Rasterkarte 10 als Positionsmarken 9,9',9" eingetragen. Die Bewegungen der einzelnen Positionsmarken 9,9',9" auf der Rasterkarte 10 repräsentieren die sich ändernden Positionen der Nutzer 1,2.

Bei einem Blick auf die Rasterkarte 10 seines Nutzerendgeräts 3 erkennt also der Nutzer 1, dessen Position mit der Positionsmarke 9 gekennzeichnet ist, dass sich in seiner Nähe zwei Nutzer 2 mit den Positionsmarken 9',9" aufhalten. Entscheidet er sich für ein Treffen mit dem zweiten Nutzer 2, dessen Position durch die Positionsmarke 9' repräsentiert wird, so kann er sowohl seinen Weg als auch den Weg des Nutzers 2 auf der Rasterkarte 10 mit verfolgen. Insbesondere ist dies hilfreich, um etwa dem Nutzer 2 einen Weg zu erklären.

Möchte der Nutzer 1 mit dem Nutzer 2 direkt sprechen, so klickt er einfach die Positionsmarke 9' des Nutzers 2 an. Das Nutzerendgerät 3 erfragt von der Datenbank 6 des Servers 5 die erforderlichen Nutzerdaten, wozu eine Autorisierung des Nutzers 2 vorliegt. Mit den eine Telefonnummer umfassenden Daten des Nutzerdatensatzes baut das Nutzerendgerät 3 eine Kommunikationsverbindung mit dem Nutzerendgerät 7 des zweiten Nutzers 2 auf.

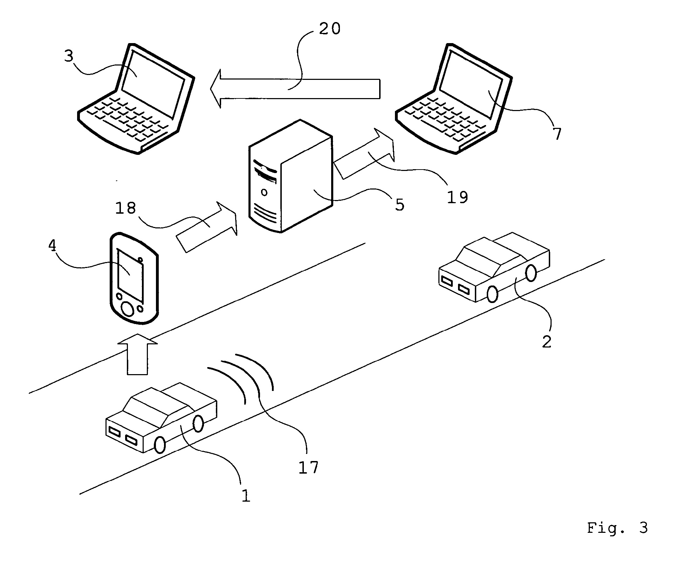

Figur 3 zeigt schließlich eine weitere Möglichkeit des Kommunikationsaufbaus mithilfe des erfindungsgemäßen Verfahrens. Ein Nutzer 1 und ein Nutzer 2 sind auf einer Straße unterwegs, wobei der Nutzer 1 mit dem Nutzer 2 in Kontakt treten möchte. Mittels eines Radargeräts unternimmt der Nutzer 1 eine Abstandsmessung 17 zu dem Fahrzeug des Nutzers 2 und berechnet anhand der Abstandsmessung 17 und der eigenen Position, sowie der Ausrichtung des Radargeräts die geografische Position des Nutzers 2. Über den Server 5, der auf eine durch die Navigationsdaten des Navigationsgeräts 4 gestützte Anfrage hin an der angegebenen Position den Nutzer 2 auffindet, wird eine GPS-SMS 19 an das Nutzerendgerät 7 des Nutzers 2 gesendet, welche in dem Nutzerendgerät 7 einen Anruf 20 bei dem Nutzerendgerät 3 des Nutzers 1 auslöst.

Vorstehend beschrieben ist somit ein Verfahren zur Unterstützung der Bildung von Fahrgemeinschaften, bei dem ein Angebot zur Bildung einer Fahrgemeinschaft für eine bestimmte Fahrtstrecke direkt mit der Eingabe der fraglichen Fahrtstrecke in das Fahrzeugnavigationssystem vorgesehen ist. Dies vereinfacht und erleichtert die Benutzung eines solchen Systems und trägt wesentlich zur Vergrößerung von dessen Effizienz bei.

### BEZUGSZEICHENLISTE

- 1: Nutzer 1
- 2: Nutzer 2
- 3: Nutzerendgerät
- 4: Navigationsgerät
- 5: Server
- 6: Datenbank
- 7: zweites Nutzerendgerät
- 8: GPS-System
- 9,9',9": Positionsmarke
- 10: Rasterkarte
- 11: Fahrtstreckeneingabe
- 12: Übergabe der Fahrtstreckendaten
- 13: Kommunikation zum Server
- 14: Datenbankabfrage
- 15: Angebot an Nutzer 2
- 16: Mitteilung an Nutzer 1
- 17: Abstandsmessung
- 18: Anfrage
- 19: GPS-SMS
- 20: Anruf

## Patentansprüche

1. Verfahren zur Unterstützung der Bildung von Fahrgemeinschaften, bei dem ein Nutzerendgerät (3) mit einem eine Datenbank (6) umfassenden Server (5) datenverbunden ist und die Datenbank (6) einen dem Nutzerendgerät (3) zugeordneten Nutzerdatensatz enthält, wobei der Server (5) auf Anfrage durch das Nutzerendgerät (3) korrelierende zweite Nutzerdatensätze innerhalb der Datenbank (6) sucht und im Erfolgsfall einen öffentlichen Teil dieser zweiten Nutzerdatensätze an das Nutzerendgerät (3) übermittelt, wobei dem Nutzerendgerät (3) ein Navigationsgerät (4) zugeordnet ist und eine von dem Navigationsgerät (4) berechnete Fahrtstrecke über das Nutzerendgerät (3) als aktuelle oder regelmäßige Fahrtstrecke an den Server (5) übermittelt und in den Nutzerdatensatz eingetragen wird, wobei der Server (5) auf Anfrage durch das Nutzerendgerät (3) korrelierende zweite Nutzerdatensätze sucht, welche zumindest abschnittsweise gleiche aktuelle oder regelmäßige Fahrtstrecken aufweisen und das Ergebnis dieser Suche an das Nutzerendgerät (3) zurückmeldet,
**dadurch gekennzeichnet, dass** das Navigationsgerät (4) seine aktuellen Koordinaten in regelmäßigen oder unregelmäßigen Abständen an den Server (5) sendet, wobei der Server (5) hieraus regelmäßige Fahrtstrecken ableitet und diese in den zu dem Nutzerendgerät (3) gehörenden Nutzerdatensatz einträgt.

2. Verfahren gemäß Anspruch 1, **dadurch gekennzeichnet, dass** die vom Navigationsgerät (4) berechnete Fahrtstrecke sogleich nach der Berechnung selbsttätig an den Server (5) weitergeleitet wird.

3. Verfahren gemäß einem der Ansprüche 1 oder 2, **dadurch gekennzeichnet, dass** das Nutzerendgerät (3) und/oder das Navigationsgerät (4) dahingehend parametrierbar ist, ob es sich um eine regelmäßige oder eine aktuelle Fahrtstrecke handelt und nach welchen Regeln sich die Fahrtstrecke im Falle einer regelmäßigen Fahrtstrecke wiederholt.

4. Verfahren gemäß einem der vorhergehenden Ansprüche, **dadurch gekennzeichnet, dass** die aktuellen oder regelmäßigen Fahrtstrecken durch ausdrücklich gesetzte oder vom Server (5) aus den vonseiten des Navigationsgeräts (4) erstellten Fahrtstreckendaten selbsttätig ermittelte Wegpunkte in Fahrtstreckenabschnitte unterteilt sind.

5. Verfahren gemäß einem der vorhergehenden Ansprüche, **dadurch gekennzeichnet, dass** dem Server (5) ein Internetportal zugeordnet ist, über welches ein Nutzer (1,2) aktuelle oder regelmäßige Fahrtstrecken in einen Nutzerdatensatz einpflegen und Anfragen nach korrelierenden Nutzerdatensätzen an den Server (5) richten kann.

6. Verfahren gemäß einem der vorhergehenden Ansprüche, **dadurch gekennzeichnet, dass** innerhalb des Nutzerdatensatzes Start- und Zielkoordinaten, sowie Wegpunktkoordinaten für die Fahrtstrecken eingeführt werden, wobei bei dem Vergleich der aktuellen oder regelmäßigen Fahrtstrecken zweier Nutzerdatensätze diese Start-, Ziel- und/oder Wegpunktkoordinaten mit einer, vorzugsweise vorgebbaren, Toleranz behandelt werden.

7. Verfahren gemäß einem der vorhergehenden Ansprüche, **dadurch gekennzeichnet, dass** innerhalb eines Nutzerdatensatzes aktuelle oder regelmäßige Fahrtstrecken als Angebote oder als Gesuche formuliert sind, wobei der Server bei der Suche nach korrelierenden Nutzerdatensätzen Angebote jeweils lediglich mit wenigstens einem Gesuch verbindet.

8. Verfahren gemäß einem der vorhergehenden Ansprüche, **dadurch gekennzeichnet, dass** der Server (5) nach Übermittlung eines Suchergebnisses mit zumindest einem Treffer wenigstens einen der betroffenen Nutzer (1,2) zur Abgabe eines Angebots zur Initiierung einer Fahrgemeinschaft auffordert.

9. Verfahren gemäß Anspruch 8, **dadurch gekennzeichnet, dass** einem Nutzer (2) ein Angebot zur Initiierung einer Fahrgemeinschaft vom Server (5) über sein Nutzerendgerät (7) übermittelt wird und bei Annahme des Angebots durch den Nutzer (2) der nichtöffentliche Teil des Nutzerdatensatzes den anderen beteiligten Nutzern (1) zugänglich gemacht wird.

10. Verfahren gemäß einem der Ansprüche 8 oder 9, **dadurch gekennzeichnet, dass** die Kommunikation zwischen dem Server (5) und den Nutzerendgeräten (3,7) über Funk, mobiles Internet oder GPS-SMS abgewickelt wird.

11. Verfahren gemäß einem der vorhergehenden Ansprüche, **dadurch gekennzeichnet, dass** der Server (5) im Falle einer erfolgreichen Suche gleichzeitig mit der Übersendung seines Suchergebnisses eine direkte Kommunikationsverbindung zwischen wenigstens zwei Nutzerendgeräten (3,7) vorbereitet, welche nach Bestätigung zumindest eines der Nutzer (1,2) aufgebaut wird.

12. Verfahren gemäß Anspruch 11, **dadurch gekennzeichnet, dass** es sich bei der Kommunikationsverbindung um eine Chatline oder eine Sprechverbindung, letztere vorzugsweise mittels Voice-over-Internet-Protocol (VoIP), handelt.

13. Verfahren gemäß einem der vorhergehenden Ansprüche, **dadurch gekennzeichnet, dass** der Nutzer (1) durch Eingabe einer Nutzerkennung eines zweiten Nutzers (2) in das Nutzerendgerät (3) eine Anfrage zum Abgleich des dem Nutzerendgerät (3) zugeordneten Nutzerdatensatzes mit einem der Nutzerkennung des zweiten Nutzers (2) zugeordneten zweiten Nutzerdatensatz an den Server richten kann.

14. Verfahren gemäß Anspruch 13, **dadurch gekennzeichnet, dass** es sich bei der Nutzerkennung um einen Aliasnamen oder um die Nummer eines Kfz-Kennzeichens handelt.

15. Verfahren gemäß Anspruch 13, **dadurch gekennzeichnet, dass** es sich bei der Nutzerkennung um die aktuelle Position des zweiten Nutzers (2) handelt, welche vorzugsweise aus der eigenen Position des Nutzers (1) und dem im Wege einer Abstandsmessung (17) ermittelten Abstand zu dem zweiten Nutzer (2) ermittelt wird.

16. Verfahren gemäß Anspruch 15, **dadurch gekennzeichnet, dass** der Nutzer (1) mit dem zweiten Nutzer (2) durch Versendung einer GPS-SMS (19) an dessen Nutzerendgerät (7) in Kontakt tritt.

17. Verfahren gemäß einem der vorhergehenden Ansprüche, **dadurch gekennzeichnet, dass** der Nutzer (1) mit beliebig vielen zweiten Nutzern (2) durch Versendung von GPS-SMS (19) an alle zweiten Nutzer (2) in einem auf einer Rasterkarte definierbaren Gebiet in Kontakt tritt.

18. Verfahren gemäß einem der vorhergehenden Ansprüche, **dadurch gekennzeichnet, dass** das Nutzerendgerät (3) seine Position mithilfe des Navigationsgeräts (4) in regelmäßigen oder unregelmäßigen zeitlichen Abständen ermittelt und die jeweils aktuelle Position in Form von Positionsdaten, vorzugsweise Rasterkoordinaten, in die Datenbank (6) einträgt.

19. Verfahren gemäß Anspruch 18, **dadurch gekennzeichnet, dass** über das Nutzerendgerät (3) aus der Datenbank (6) Positionsdaten aus den Datensätzen weiterer Nutzerendgeräte ausgelesen und deren Position, vorzugsweise gemeinsam mit der Position des Nutzerendgeräts (3) in einer Umgebungskarte, vorzugsweise in Form einer Rasterkarte, angezeigt werden.

20. Verfahren gemäß Anspruch 19, **dadurch gekennzeichnet, dass** die Positionsdaten der Nutzer als Rasterkoordinaten gespeichert und übermittelt werden.

21. Verfahren gemäß einem der Ansprüche 18 bis 20, **dadurch gekennzeichnet, dass** die Navigation anhand der Rasterkarte (10) durchgeführt wird.

22. Verfahren gemäß einem der Ansprüche 18 bis 21, **dadurch gekennzeichnet, dass** die als Umgebungskarte verwendete und die der Navigation zugrunde gelegte Rasterkarte (10) entweder zwischen beteiligten Nutzerendgeräten (3,7) gegeneinander abgeglichen oder von einer gemeinsamen Datenquelle bezogen werden.

23. Verfahren gemäß einem der Ansprüche 18 bis 22, **dadurch gekennzeichnet, dass** durch einen Klick auf die Positionsanzeige eines zweiten Nutzers (2) mit diesem eine Kommunikationsverbindung aufgebaut wird, wobei vorzugsweise eine GPS-SMS (19) an den zweiten Nutzer (2) gesandt wird, welche das zweite Nutzerendgerät (7) aktiviert und den Aufbau einer Kommunikationsverbindung auslöst.

24. Verfahren gemäß einem der Ansprüche 18 bis 23, **dadurch gekennzeichnet, dass** dem Nutzerendgerät (3) abhängig von seiner Position positionsrelevante Inhalte der Datenbank (6) per GPS-SMS (19) zugesandt werden.
